# EUROPÄISCHE PATENTANMELDUNG

(11) **EP 2 876 170 A1**
(43) Veröffentlichungstag der Anmeldung: **27.05.2015**
(21) Anmeldenummer: 13193606.4
(22) Anmeldetag: 20.11.2013
(51) Int. Cl.: C21B 5/06, C21B 13/00, C21B 13/02

(54) **Verfahren und Vorrichtung zur Bereitstellung von Reduktionsgas unter konstanten Bedingungen**

(71) Anmelder: Siemens VAI Metals Technologies GmbH, 4031 Linz (AT)
(72) Erfinder: Millner, Robert, 3382 Loosdorf (AT); Rosenfellner, Gerald, 3352 Ertl (AT); Stockinger, Josef, 4222 Luftenberg (AT)
(74) Vertreter: Maier, Daniel Oliver

(57) **Zusammenfassung**

Die Anmeldung betrifft ein Verfahren zur Herstellung von Metallschwamm, wobei metalloxidhaltige Ausgangsstoffe in einem Reduktionsaggregat mittels eines Reduktionsgases zu Metallschwamm reduziert werden, und dabei verbrauchtes Reduktionsgas als Topgas aus dem Reduktionsaggregat abgezogen wird, und wobei die Herstellung des in das Reduktionsaggregat eintretenden Reduktionsgases erfolgt unter Mischung zumindest einer Teilmenge des Topgases mit zumindest einem Eduktgas mit Reduktionspotential zu einem Mischgas, oder aus reinem Eduktgas mit Reduktionspotential. Dabei wird Eduktgas mit Reduktionspotential zusammen mit zumindest einer Teilmenge des Topgases in einem Gasspeicher als Speichergasmischung gespeichert, und zumindest eine Teilmenge der Speichergasmischung in das Topgas vor Mischung des Topgases mit dem Eduktgas mit Reduktionspotential, und/oder in das Eduktgas, und/oder in das Mischgas eingeleitet wird.

## Beschreibung

### Gebiet der Technik

Die Anmeldung betrifft ein Verfahren zur Herstellung von Metallschwamm,
wobei metalloxidhaltige Ausgangsstoffe in einem Reduktionsaggregat mittels eines Reduktionsgases zu Metallschwamm reduziert werden. Weiters betrifft sie eine Anlage zur Durchführung eines solchen Verfahrens.

### Stand der Technik

Bei Verbundanlagen, die Exportgas aus einer Roheisenerzeugungsanlage-beispielsweise COREX®-Anlage, FINEX®-Anlage, Hochofen beziehungsweise speziell Sauerstoffhochofen - nutzen, um in einem weiteren Reduktionsaggregat - beispielsweise einem Direktreduktionsschacht - eisenoxidhaltige Einsatzstoffe zu reduzieren, schwankt die pro Zeiteinheit anfallende Exportgasmenge betriebsbedingt in der Größenordnung +/-10%. Meist dient zur Herstellung des Reduktionsgases für das weitere Reduktionsaggregat das Exportgas als ein Eduktgas, dem Topgas aus dem weiteren Reduktionsaggregat zugemischt wird. Weil der Betrieb des weiteren Roheisenerzeugungsaggregates eine Lieferung von Reduktionsgas unter weitgehend konstanten Bedingungen, also beispielsweise ohne Druckschwankungen oder ohne Schwankungen der pro Zeiteinheit gelieferten Menge Reduktionsgas benötigt, müssen die Schwankungen der pro Zeiteinheit anfallenden Exportgasmenge ausgeglichen werden. Das geschieht einerseits dadurch, dass die Menge des zugemischten Topgases entsprechend reguliert wird, und andererseits durch Speicherung von Überschüssen in einem Gasspeicher, meist einem Niederdruckgasspeicher. In diesen wird oft auch anderweitig nicht benötigtes Topgas eingeleitet, wodurch der Gasspeicher meist eine Speichergasmischung aus zumindest diesen beiden Komponenten enthält.

Das in einem Niederdruckgasspeicher vorhandene Gas steht unter einem Druck, der zu gering ist, um eine Einspeisung in Gasströme, die zur Herstellung des Reduktionsgases dienen, zu erlauben. Daher kann sein Energieinhalt und Reduktionspotential nicht in dem weiteren Reduktionsaggregat genutzt werden, was die Wirtschaftlichkeit und Umweltbilanz des Betriebes der Verbundanlage beeinträchtigt.

### Zusammenfassung der Erfindung

### Technische Aufgabe

Es ist die Aufgabe der vorliegenden Erfindung, ein Verfahren zur Herstellung von Metallschwamm bereitzustellen, das derartige Nachteile nicht aufweist.

### Technische Lösung

Diese Aufgabe wird gelöst durch ein Verfahren zur Herstellung von Metallschwamm,
wobei metalloxidhaltige Ausgangsstoffe in einem Reduktionsaggregat mittels eines Reduktionsgases zu Metallschwamm reduziert werden,
und dabei verbrauchtes Reduktionsgas als Topgas aus dem Reduktionsaggregat abgezogen wird,
und wobei die Herstellung des in das Reduktionsaggregat eintretenden Reduktionsgases erfolgt
- unter Mischung
   zumindest einer Teilmenge des Topgases mit zumindest einem Eduktgas mit Reduktionspotential zu einem Mischgas
   oder
- aus reinem Eduktgas mit Reduktionspotential,
   und wobei Eduktgas mit Reduktionspotential zusammen mit zumindest einer Teilmenge des Topgases in einem Gasspeicher als Speichergasmischung gespeichert wird,
   dadurch gekennzeichnet, dass
   zumindest eine Teilmenge der Speichergasmischung
- in das Topgas vor Mischung des Topgases mit dem Eduktgas mit Reduktionspotential,
   und/oder
- in das Eduktgas
   und/oder
- in das Mischgas
eingeleitet wird.

Unter reinem Eduktgas ist hier zu verstehen das Eduktgas bevor es in ein Mischgas eingeht.

Nach einer Ausführungsform handelt es sich um Eisenschwamm.
Bevorzugt handelt es sich bei dem Metalloxid um Eisenoxid.

Das Reduktionsaggregat ist beispielsweise ein Reduktionsschacht, bevorzugt ein Direktreduktionsschacht, oder ein Wirbelschichtreaktorsystem.

Nach einer bevorzugten Variante des Verfahrens ist das Eduktgas mit Reduktionspotential Exportgas aus einer mit dem Reduktionsaggregat im Verbund befindlichen Roheisenerzeugungsanlage.
Nach einer bevorzugten Variante des Verfahrens ist die mit dem Reduktionsaggregat im Verbund befindliche Roheisenerzeugungsanlage eine
- COREX®-Anlage, oder
- FINEX®-Anlage, oder
- ein Hochofen, bevorzugt Sauerstoffhochofen.

Als Eduktgas mit Reduktionspotential dient also beispielsweise Exportgas aus einer COREX®-Anlage, Exportgas aus einer FINEX®-Anlage, oder Exportgas aus einem Hochofen, speziell einem Sauerstoffhochofen.
Unter Exportgas ist dabei zu verstehen ein Gas, das nach Reinigung von Roheisenerzeugungs-Topgas aus einer Roheisenerzeugungsanlage, beispielsweise einer Anlage zur Herstellung von flüssigem Roheisen, abgezogen wird. Zum Roheisenerzeugungs-Topgas kann auch Überschussgas aus beispielsweise einem Einschmelzvergaser einer Anlage zur Herstellung von flüssigem Roheisen zugemischt werden; auch eine solche Mischung ist nach Reinigung als Exportgas bezeichnet.

Gemäß dem beanspruchten Verfahren werden metalloxidhaltige Ausgangsstoffe in dem Reduktionsaggregat mittels eines Reduktionsgases zu Metallschwamm reduziert und dabei verbrauchtes Reduktionsgas als Topgas aus dem Reduktionsaggregat abgezogen. Die Herstellung des in das Reduktionsaggregat eintretenden Reduktionsgases erfolgt zumindest zum Teil unter Mischung zumindest einer Teilmenge des Topgases mit zumindest einem Eduktgas mit Reduktionspotential zu einem Mischgas - es kann auch das gesamte Reduktionsgas so hergestellt werden. Das in das Reduktionsaggregat eintretende Reduktionsgas kann auch nur aus dem Eduktgas mit Reduktionspotential hergestellt werden, also aus reinem Eduktgas mit Reduktionspotential.
Bei dem beanspruchten Verfahren wird Eduktgas mit Reduktionspotential zusammen mit zumindest einer Teilmenge des Topgases in einem Gasspeicher, bevorzugt einem Niederdruckgasspeicher, als Speichergasmischung gespeichert.
Das erfindungsgemäße Verfahren ist dadurch gekennzeichnet, dass zumindest eine Teilmenge der Speichergasmischung
- in das Topgas vor Mischung des Topgases mit dem Eduktgas mit Reduktionspotential,
   und/oder
- in das Eduktgas
   und/oder
- in das Mischgas
eingeleitet wird.

Unter einem Niederdruckgasspeicher ist ein Gasspeicher zu verstehen, der einen Druck von unter 15 kPa (g) ausweist.

Die erfindungsgemäße Einleitung von Speichergasmischung erfolgt in Gase, die zur Herstellung des Reduktionsgases beitragen. Bei Einleitung in das Mischgas kann in das Mischgas eingeleitet werden, bevor oder nachdem dieses weitere Behandlungsschritte wie beispielsweise Kühlung oder Komprimierung oder Entfernung von CO₂ durchläuft. Dadurch wird Speichergasmischung zur Herstellung von Reduktionsgas genutzt, was sein Reduktionspotential ausnutzt und das Verfahren zur Herstellung von Metallschwamm umweltfreundlicher und wirtschaftlicher macht als bei nicht erfolgender Nutzung dieses Reduktionspotentials.

Vorzugsweise wird die Speichergasmischung nach einer, beispielsweise mittels einem oder mehreren Kompressoren erfolgenden, Druckerhöhung in das Topgas oder in das Eduktgas oder das Mischgas eingeleitet. Bevorzugt wird die Speichergasmischung dabei auf einen Druck gebracht, der dem Druck des Gases, in welches es eingeleitet wird, entspricht, beziehungsweise diesen Druck übertrifft. Beispielsweise wird eine Speichergasmischung, die in einem Niederdruckgasspeicher unter einem Druck von 7 kPa(g) steht, auf einen Druck von 20 -40 kPa(g) des Topgases eines Direktreduktionsschachtes gebracht, oder auf 270 - 720 kPa(g) des Mischgases, oder auf 80 - 250 kPa(g) des Eduktgases. Wenn dieses Topgas mit dem Eduktgas vermischt wird, wird es vorher selber auf den Druck des Eduktgases 80-250 kPa(g) komprimiert werden; die Speichergasmischung kann zwecks Einleitung in das derart komprimierte Topgas auch auf einen Druck von 80 - 250 kPa(g) gebracht werden.

Nach einer bevorzugten Variante des Verfahrens erfolgt die Herstellung des in den Reduktionsschacht eintretenden Reduktionsgases unter CO₂-Entfernung aus dem Mischgas sowie Erwärmung des Produktgases der CO₂-Entfernung, wobei die Speichergasmischung vor der CO₂-Entfernung in das Mischgas eingeleitet wird. Auf diese Weise wird im Mischgas enthaltenes CO₂ ebenfalls entfernt.

Ein weiterer Gegenstand der vorliegenden Anmeldung ist eine Anlage zur Durchführung eines erfindungsgemäßen Verfahrens, mit
- einem Reduktionsaggregat zur Reduktion metalloxidhaltiger Ausgangsstoffe zu Metallschwamm,
- einer Topgasleitung zum Abziehen von verbrauchtem Reduktionsgas als Topgas aus dem Reduktionsaggregat,
- einer Reduktionsgaszufuhrleitung zur Zufuhr von Reduktionsgas in das Reduktionsaggregat,
- eine Mischgasleitung zur Zufuhr von Mischgas zur Reduktionsgaszufuhrleitung,
- einer Eduktgasleitung zur Zufuhr von Eduktgas mit Reduktionspotential zur Mischgasleitung,
   wobei von der Topgasleitung eine Recyclegasleitung ausgeht, die in die Eduktgasleitung mündet,
- einem Gasspeicher, bevorzugt Niederdruckgasspeicher,
   wobei von der Topgasleitung eine Topgasspeicherleitung zur Einleitung von Topgas in den Gasspeicher, bevorzugt Niederdruckgasspeicher, ausgeht,
   und wobei von der Eduktgasleitung eine Eduktgasspeicherleitung zur Einleitung von Eduktgas in den Niederdruckgasspeicher ausgeht.

Die Anlage ist dadurch gekennzeichnet, dass
eine oder mehrere Speichergasrecycleleitungen zur Zufuhr von Speichergas aus dem Gasspeicher in
- die Topgasleitung,
   und/oder
- die Recyclegasleitung
   und/oder
- die Eduktgasleitung
   und/oder
- die Mischgasleitung
vorhanden sind.

Nach einer bevorzugten Ausführungsform ist in zumindest einer Speichergasrecycleleitung zumindest eine Vorrichtung zur Druckerhöhung vorhanden, beispielsweise ein Kompressor oder ein Gebläse.

Nach einer bevorzugten Ausführungsform sind in der Mischgasleitung eine oder mehrere Vorrichtungen zur Entfernung von CO₂ aus dem Mischgas vorhanden, und sind in der Mischgasleitung zumindest eine Vorrichtung zur Erwärmung des aus der oder den Vorrichtungen zur Entfernung von CO₂ austretenden Produktgases vorhanden, wobei zumindest eine Speichergasrecycleleitung vor - von der Mündung der Recyclegasleitung in die Eduktgasleitung in Richtung Reduktionsgaszufuhrleitung gesehen - der Vorrichtungen zur Entfernung von CO₂ in die Mischgasleitung mündet.

Nach einer bevorzugten Ausführungsform geht die Eduktgasleitung von einer Roheisenerzeugungsanlage aus, besonders bevorzugt von einer mit dem Reduktionsaggregat im Verbund befindlichen Roheisenerzeugungsanlage.

Nach einer bevorzugten Variante des Verfahrens ist die, bevorzugt mit dem Reduktionsaggregat im Verbund befindliche, Roheisenerzeugungsanlage eine
- COREX®-Anlage, oder
- FINEX®-Anlage, oder
- ein Hochofen, bevorzugt Sauerstoffhochofen.

Die Regelung der Menge an Speichergas, die in das Topgas oder das Eduktgas oder das Mischgas eingeleitet wird, wird vorzugsweise konstant geregelt, was beispielsweise über Flussregelarmaturen - hinter den Vorrichtungen zur Druckerhöhung in Gasflussrichtung gesehen - oder Regelung der Vorrichtungen zur Druckerhöhung erfolgen kann.

### Vorteilhafte Wirkungen der Erfindung

### Kurze Beschreibung der Zeichnungen

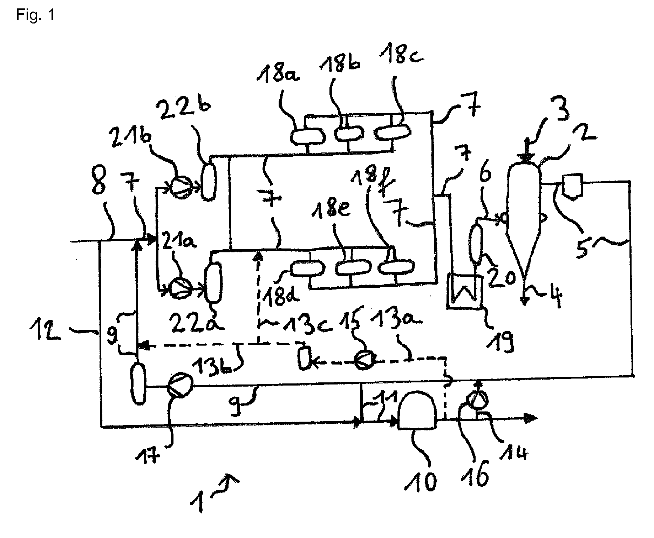

Figur 1 zeigt eine schematische beispielhafte Darstellung einer Ausführungsform einer erfindungsgemäßen Anlage zur Durchführung eines erfindungsgemäßen Verfahrens.

### Beschreibung der Ausführungsformen

In Figur 1 ist eine Anlage 1 zur Durchführung eines erfindungsgemäßen Verfahrens gezeigt mit
- einem Reduktionsaggregat - hier einem Direktreduktionsschacht 2 - zur Reduktion eisenoxidhaltiger Ausgangsstoffe 3 zu Eisenschwamm 4,
- einer Topgasleitung 5 zum Abziehen von verbrauchtem Reduktionsgas als Topgas aus dem Direktreduktionsschacht 2,
- einer Reduktionsgaszufuhrleitung 6 zur Zufuhr von Reduktionsgas in den Direktreduktionsschacht 2,
- eine Mischgasleitung 7 zur Zufuhr von Mischgas zur Reduktionsgaszufuhrleitung 6,
- einer Eduktgasleitung 8 zur Zufuhr von Eduktgas mit Reduktionspotential zur Mischgasleitung 7,
   wobei von der Topgasleitung 5 eine Recyclegasleitung 9 ausgeht, die in die Eduktgasleitung 8 mündet,
- einem Niederdruckgasspeicher 10,
   wobei von der Topgasleitung 5 eine Topgasspeicherleitung 11 zur Einleitung von Topgas in den Niederdruckgasspeicher 10 ausgeht,
   und wobei von der Eduktgasleitung 8 eine Eduktgasspeicherleitung 12 zur Einleitung von Eduktgas in den Niederdruckgasspeicher ausgeht. In der dargestellten Variante mündet die Eduktgasspeicherleitung 12 in die Topgasspeicherleitung 11, bevor diese in den Niederdruckgasspeicher 10 mündet. Eduktgas wird also ein Stück zusammen mit Topgas in den Niederdruckgasspeicher 10 geleitet.

In der Anlage sind mehrere Speichergasrecycleleitungen 13a, 13b, 13c, 14 zur Zufuhr von Speichergas aus dem Niederdruckgasspeicher 10 in
- die Topgasleitung 5,
- die Recyclegasleitung 9,
- die Mischgasleitung 7
vorhanden.
In der Speichergasrecycleleitung 13a ist als Vorrichtung zur Druckerhöhung ein Kompressor 15 vorhanden.
In der Speichergasrecycleleitung 14 ist als Vorrichtung zur Druckerhöhung ein Blower 16 vorhanden.
Über die Recyclegasleitung 9 wird Topgas dem in der Eduktgasleitung 8 strömenden Eduktgas zwecks Mischung zugeführt. In der Recyclegasleitung 9 ist ein Kompressor 17 vorhanden, der dieses Topgas auf das Druckniveau des Eduktgases bringt-beispielsweise von 20 - 40 kPa(g) auf 80 - 250 kPa(g)..
Im Niederdruckgasspeicher herrscht ein Druck von 7 kPa(g).

In der Mischgasleitung 7 ist eine Vorrichtung zur Entfernung von CO₂, bestehend aus mehreren Trains 18a, 18b, 18c, 18d, 18e, 18f, aus dem Mischgas vorhanden - hier eine VPSA-Anlage. Hinter dieser sind - von der Mündung der Recyclegasleitung 9 in die Eduktgasleitung 8 in Richtung Reduktionsgaszufuhrleitung 6 gesehen - in der Mischgasleitung Vorrichtungen zur Erwärmung des aus den Trains 18a, 18b, 18c, 18d, 18e, 18f der VPSA-Anlage austretenden Produktgases vorhanden sind, hier ein über indirekten Wärmetausch arbeitender Ofen 19 und ein unter Teilverbrennung mit Sauerstoff arbeitender Brenner 20.
Die Speichergasrecycleleitung 13c mündet vor - von der Mündung der Recyclegasleitung 9 in die Eduktgasleitung 8 in Richtung Reduktionsgaszufuhrleitung 6 gesehen - der Vorrichtungen zur Entfernung von CO₂ mit den Trains 18a, 18b, 18c, 18d, 18e, 18f in die Mischgasleitung 7.
Vor den VPSA-Anlage - von der Mündung der Recyclegasleitung 9 in die Eduktgasleitung 8 in Richtung Reduktionsgaszufuhrleitung 6 gesehen - sind in der Mischgasleitung Kompressoren 21 a, 21 b und Kühler 22a, 22b vorhanden, die das Mischgas auf eine für den Betrieb der (V)PSA-Anlage günstigen Druck - beispielsweise 270 bis 720 kPa(g)-und Temperatur bringen.

Die Eduktgasleitung 8 geht von einer aus Gründen der Übersichtlichkeit nicht dargestellten COREX®-Anlage aus und führt Exportgas dieser Anlage.

Eisenoxidhaltige Ausgangsstoffe 3 werden in dem Direktreduktionsschacht 2 mittels eines Reduktionsgases zu Metallschwamm 4 reduziert.
Dabei verbrauchtes Reduktionsgas wird über die Topgasleitung 5 als Topgas aus dem Direktreduktionsschacht 2 abgezogen.
Die Herstellung des in den Direktreduktionsschacht 2 eintretenden Reduktionsgases erfolgt unter Mischung einer Teilmenge des Topgases mit dem Exportgas der COREX®-Anlage als Eduktgas mit Reduktionspotential zum Mischgas. Eduktgas mit Reduktionspotential wird zusammen mit einer Teilmenge des Topgases in dem Niederdruckgasspeicher als Speichergasmischung gespeichert. Die Speichergasmischung wird sowohl in das Topgas vor Mischung des Topgases mit dem Eduktgas mit Reduktionspotential als auch in das Mischgas eingeleitet.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Anlage zur Durchführung eines erfindungsgemäßen Verfahrens
- 2: Direktreduktionsschacht
- 3: eisenoxidhaltige Ausgangsstoffe
- 4: Eisenschwamm
- 5: Topgasleitung
- 6: Reduktionsgaszufuhrleitung
- 7: Mischgasleitung
- 8: Eduktgasleitung
- 9: Recyclegasleitung
- 10: Niederdruckgasspeicher
- 11: Topgasspeicherleitung
- 12: Eduktgasspeicherleitung
- 13a, 13b, 13c: Speichergasrecycleleitung
- 14: Speichergasrecycleleitung
- 15: Kompressor
- 16: Blower
- 17: Kompressor
- 18a, 18b, 18c, 18d, 18e, 18f: Trains einer Vorrichtung zur Entfernung von CO₂
- 19: Ofen
- 20: Brenner
- 21a,21b: Kompressoren
- 22a, 22b: Kühler

## Patentansprüche

1. Verfahren zur Herstellung von Metallschwamm,
wobei metalloxidhaltige Ausgangsstoffe in einem Reduktionsaggregat mittels eines Reduktionsgases zu Metallschwamm reduziert werden,
und dabei verbrauchtes Reduktionsgas als Topgas aus dem Reduktionsaggregat abgezogen wird,
und wobei die Herstellung des in das Reduktionsaggregat eintretenden Reduktionsgases erfolgt
- unter Mischung
zumindest einer Teilmenge des Topgases mit zumindest einem Eduktgas mit Reduktionspotential zu einem Mischgas
oder
- aus reinem Eduktgas mit Reduktionspotential,
und wobei Eduktgas mit Reduktionspotential zusammen mit zumindest einer Teilmenge des Topgases in einem Gasspeicher als Speichergasmischung gespeichert wird,
**dadurch gekennzeichnet, dass**
zumindest eine Teilmenge der Speichergasmischung
- in das Topgas vor Mischung des Topgases mit dem Eduktgas mit Reduktionspotential,
und/oder
- in das Eduktgas
und/oder
- in das Mischgas
eingeleitet wird.

2. Verfahren nach Anspruch 1, **dadurch gekennzeichnet, dass** die Speichergasmischung nach einer, beispielsweise mittels einem oder mehreren Kompressoren erfolgenden, Druckerhöhung in das Topgas oder in das Eduktgas oder das Mischgas eingeleitet wird.

3. Verfahren nach einem der Ansprüche 1 oder 2, **dadurch gekennzeichnet, dass** die Herstellung des in den Reduktionsschacht eintretenden Reduktionsgases unter CO₂-Entfernung aus dem Mischgas sowie Erwärmung des Produktgases der CO₂-Entfernung erfolgt, wobei die Speichergasmischung vor der CO₂-Entfernung in das Mischgas eingeleitet wird.

4. Verfahren nach einem der Ansprüche 1 bis 3, **dadurch gekennzeichnet, dass** das Eduktgas mit Reduktionspotential Exportgas aus einer mit dem Reduktionsaggregat im Verbund befindlichen Roheisenerzeugungsanlage ist.

5. Verfahren nach einem der Ansprüche 1 bis 4, **dadurch gekennzeichnet, dass** die mit dem Reduktionsaggregat im Verbund befindliche Roheisenerzeugungsanlage eine
- COREX®-Anlage, oder
- FINEX®-Anlage, oder
- ein Hochofen, bevorzugt Sauerstoffhochofen,
ist.

6. Anlage (1) zur Durchführung eines Verfahrens nach einem der Ansprüche 1 bis 5, mit
- einem Reduktionsaggregat zur Reduktion metalloxidhaltiger Ausgangsstoffe zu Metallschwamm,
- einer Topgasleitung (5) zum Abziehen von verbrauchtem Reduktionsgas als Topgas aus dem Reduktionsaggregat,
- einer Reduktionsgaszufuhrleitung (6) zur Zufuhr von Reduktionsgas in das Reduktionsaggregat,
- eine Mischgasleitung (7) zur Zufuhr von Mischgas zur Reduktionsgaszufuhrleitung (6),
- einer Eduktgasleitung (8) zur Zufuhr von Eduktgas mit Reduktionspotential zur Mischgasleitung (7),
wobei von der Topgasleitung (5) eine Recyclegasleitung (9) ausgeht, die in die Eduktgasleitung (8) mündet,
- einem Gasspeicher, bevorzugt Niederdruckgasspeicher (10),
wobei von der Topgasleitung (5) eine Topgasspeicherleitung (11) zur Einleitung von Topgas in den Gasspeicher, bevorzugt Niederdruckgasspeicher (10), ausgeht,
und wobei von der Eduktgasleitung (8) eine Eduktgasspeicherleitung (12) zur Einleitung von Eduktgas in den Niederdruckgasspeicher (10) ausgeht,
**dadurch gekennzeichnet, dass**
eine oder mehrere Speichergasrecycleleitungen (13a,13b,13c) zur Zufuhr von Speichergas aus dem Gasspeicher in
- die Topgasleitung (5),
und/oder
- die Recyclegasleitung (9)
und/oder
- die Eduktgasleitung (8)
und/oder
- die Mischgasleitung (7)
vorhanden sind.

7. Anlage nach Anspruch 6, **dadurch gekennzeichnet, dass** in zumindest einer Speichergasrecycleleitung (13a,13b,13c) zumindest eine Vorrichtung zur Druckerhöhung vorhanden ist.

8. Anlage nach einem der Ansprüche 6 und 7, **dadurch gekennzeichnet, dass** in der Mischgasleitung (7) eine oder mehrere Vorrichtungen zur Entfernung von CO₂ aus dem Mischgas vorhanden sind,
und in der Mischgasleitung (7) zumindest eine Vorrichtung zur Erwärmung des aus der oder den Vorrichtungen zur Entfernung von CO2 austretenden Produktgases vorhanden ist, wobei zumindest eine Speichergasrecycleleitung (13a,13b,13c) vor - von der Mündung der Recyclegasleitung (9) in die Eduktgasleitung in Richtung Reduktionsgaszufuhrleitung (6) gesehen - der Vorrichtungen zur Entfernung von CO₂ in die Mischgasleitung (7) mündet

9. Anlage nach einem der Ansprüche 6 bis 8, **dadurch gekennzeichnet, dass** die Eduktgasleitung (8) von einer Roheisenerzeugungsanlage ausgeht, besonders bevorzugt von einer mit dem Reduktionsaggregat im Verbund befindlichen Roheisenerzeugungsanlage.

10. Anlage nach Anspruch 9, **dadurch gekennzeichnet, dass** die mit dem Reduktionsaggregat im Verbund befindliche, Roheisenerzeugungsanlage eine
- COREX®-Anlage, oder
- FINEX®-Anlage, oder
- ein Hochofen, bevorzugt Sauerstoffhochofen,
ist.

11. Anlage nach einem der Ansprüche 6 bis 10, **dadurch gekennzeichnet, dass** das Reduktionsaggregat ein Reduktionsschacht, bevorzugt ein Direktreduktionsschacht (2), oder ein Wirbelschichtreaktorsystem ist.

12. Verfahren nach Anspruch 1 bis 5 beziehungsweise Anlage nach einem der Ansprüche 6 bis 11, **dadurch gekennzeichnet, dass** es sich bei dem Metallschwamm um Eisenschwamm handelt.

13. Verfahren nach Anspruch 1 bis 5 beziehungsweise Anlage nach einem der Ansprüche 6 bis 11, **dadurch gekennzeichnet, dass** es sich bei dem Metalloxid um Eisenoxid handelt.
